# EUROPÄISCHE PATENTSCHRIFT

(11) **EP 1 567 604 B1**
(45) Veröffentlichungstag und Bekanntmachung des Hinweises auf die Patenterteilung: **30.12.2009**
(21) Anmeldenummer: 03769486.6
(22) Anmeldetag: 05.11.2003
(51) Int. Cl.: C09D 5/08, C09D 167/06, C09D 175/14

(54) **BESCHICHTUNGSSTOFF, VERFAHREN ZU SEINER HERSTELLUNG UND SEINE VERWENDUNG ZUR HERSTELLUNG HAFTFESTER, KORROSIONSHEMMENDER BESCHICHTUNGEN**
COATING MATERIAL, METHOD FOR PRODUCTION AND USE THEREOF FOR PRODUCTION OF ADHESIVE, CORROSION-RESISTANT COATINGS
MATIERE DE REVETEMENT, PROCEDE DE PRODUCTION CORRESPONDANT ET UTILISATION POUR PRODUIRE DES REVETEMENTS ANTICORROSION ADHESIFS

(30) Priorität: 03.12.2002 DE 10256265
(43) Veröffentlichungstag der Anmeldung: 31.08.2005
(73) Patentinhaber: BASF Coatings AG, 48165 Münster (DE)
(72) Erfinder: ALLARD, Maxime, 48165 Münster (DE); REHER, Thomas, 48165 Münster (DE); KAUFFER, Dominique, 48317 Drensteinfurt (DE)
(74) Vertreter: Leifert, Elmar
(86) Internationale Anmeldenummer: PCT/EP2003/012319
(87) Internationale Veröffentlichungsnummer: WO 2004/050776

(56) Entgegenhaltungen:
- EP-A- 0 389 653
- DATABASE CA [Online] CHEMICAL ABSTRACTS SERVICE, COLUMBUS, OHIO, US; TANAKA, SUKEYUKI ET AL: "Coating materials and inks forming coatings with flexibility and high surface hardness" retrieved from STN Database accession no. 125:89302 XP002268937 -& JP 08 060048 A (AJINOMOTO KK, JAPAN) 5. März 1996 (1996-03-05)
- DATABASE CA [Online] CHEMICAL ABSTRACTS SERVICE, COLUMBUS, OHIO, US; KUMAZAKI, SHIGETO ET AL: "Manufacture of vinyl-modified alkyd resins for coatings" retrieved from STN Database accession no. 112:160658 XP002268938 -& JP 01 289829 A (HITACHI CHEMICAL CO., LTD., JAPAN) 21. November 1989 (1989-11-21)

## Beschreibung

Die vorliegende Erfindung betrifft einen neuen, mit aktinischer Strahlung härtbaren Beschichtungsstoff. Außerdem betrifft die vorliegende Erfindung ein neues Verfahren zur Herstellung eines mit aktinischer Strahlung härtbaren Beschichtungsstoffs. Des Weiteren betrifft die vorliegende Erfindung die Verwendung des neuen Beschichtungsstoffs oder des mit Hilfe des neuen Verfahrens hergestellten Beschichtungsstoffs für die Herstellung haftfester, korrosionshemmender Beschichtungen, insbesondere Coils-Coatings, speziell Primerschichten.

Um haftfeste, korrosionshemmende Beschichtungen auf Metallbändern oder Coils, insbesondere aus den üblichen und bekannten Gebrauchsmetallen, wie Zink, Aluminium oder blanker, galvanisierter, elektroverzinkter und phosphatierter Stahl, mit Hilfe des Coils-Coatings-Verfahrens (Römpp Lexikon Lacke und Druckfarben, Georg Thieme Verlag, Stuttgart, New York, 1998, Seite 617, »Walzlackierung«, und Seite 55, »Bandbeschichtung«) zu erzielen, ist es notwendig, die Oberfläche der Metallbänder einer Vorbehandlung zu unterziehen. Dies stellt aber im Rahmen des Coils-Coatings-Verfahrens einen zusätzlichen Verfahrenschritt dar, auf den man aber aus wirtschaftlichen und technischen Gründen verzichten möchte.

Bekanntermaßen dienen Primerschichten der Haftvermittlung zwischen der Metalloberfläche und den darüber liegenden Beschichtungen. Sie können auch in gewissem Umfang zum Korrosionsschutz beitragen. Üblicherweise werden sie aus pigmentierten, lösemittelhaltigen, thermisch härtbaren Beschichtungsstoffen hergestellt. Dies erfordert aber aufwendige Anlagen zum Absaugen und Entsorgen der emittierten Lösemittel, und die Coils müssen auf hohe Temperaturen ("peak metal temperatures", PMT) aufgeheizt werden, um die applizierten Beschichtungsstoffe in der für das Coil-Coating-Verfahren notwendigen Geschwindigkeit auszuhärten. Es wäre daher in hohem Maße wünschenswert, lösemittelfreie, mit aktinischer Strahlung rasch härtbare Beschichtungsstoffe für die Herstellung von Primerschichten zur Verfügung zu haben.

Pigmentfreie, lösemittelfreie, mit aktinischer Strahlung härtbare Beschichtungsstoffe (100%-Systeme) sind grundsätzlich bekannt. Werden diese Beschichtungsstoffe aber so hoch pigmentiert, wie es für einen ausreichenden Korrosionsschutz eigentlich notwendig wäre, werden sie zu viskos, um beim Coil-Coatings-Verfahren mit Hilfe des Walzauftrags problemlos oder überhaupt appliziert zu werden. Stattdessen müssen höhere Applikationstemperaturen und/oder vergleichsweise aufwendige Extrusionsanlagen mit Breitschlitzdüsen angewandt werden, was beides von Nachteil für das Coil-Coatings-Verfahren ist.

Um einen guten Schutz vor Weisskorrosion, d.h. der Bildung von Zinkcarbonat aus Zinkoxid und atmosphärischem Kohlendioxid und Wasser, von Zink oder verzinkten Oberflächen mit Hilfe von lösemittelfreien, strahlenhärtbaren Beschichtungsstoffen alleine zu gewähren, müssten diese die rasche Bildung einer Zinkphosphatschicht auf der Metalloberfläche fördern. Dies wäre aber nur bei einem pH-Wert < 4 der Fall.

Dann könnten jedoch die üblichen und bekannten, chromatfreien, korrosionshemmenden Pigmente auf der Basis von Phosphaten und Silikaten nicht mehr eingesetzt werden, denn diese sind basisch und rufen eine hohe Viskosität und thixotropes Verhalten der Beschichtungsstoffe hervor.

Die üblichen und bekannten, strahlenhärtbaren, wässrigen Dispersionen dagegen werden stets mit Aminen neutralisiert, was die Weisskorrosion fördert. Sie haben einen vergleichsweise niedrigen Festkörpergehalt im Bereich von etwa 35 bis 40 Gew.-%, was zu einem besonders hohen Energieaufwand für das schnelle Verdampfen ("flash-off") des Wassers führt. Nicht zuletzt bleiben die resultierenden Beschichtungen thermoplastisch und sind daher als Primerschichten nicht geeignet.

Die üblichen und bekannten, strahlenhärtbaren, wässrigen Dispersionen auf der Basis von acrylatgruppenhaltigen Oligomeren sind zwar leicht sauer und haben einen etwas höheren Festkörpergehalt im Bereich von etwa 50 Gew.-%, sie haben aber einen sehr hohen Gehalt an oberflächenaktiven Verbindungen, wie Netzmittel und Emulgatoren. Sie reduzieren die Zwischenschichthaftung und die Korrosionsschutzwirkung und können im Grunde nur als Additive zur Erhöhung der Oberflächenreaktivität der Pigmente und der Verbesserung ihrer Dispergierung dienen.

Die üblichen und bekannten, strahlenhärtbaren Dispersionen auf der Basis von Polyacrylsäure enthalten zahlreiche freie Carboxylgruppen und koagulieren daher sofort in sauren, wässrigen Medien.

Aufgabe der vorliegenden Erfindung ist es, einen neuen, pigmentieren, mit aktinischer Strahlung härtbaren, von organischen Lösemitteln im wesentlichen oder völlig freien Beschichtungsstoff bereitzustellen, der die Nachteile des Standes der Technik nicht mehr länger aufweist, sondern der sich leicht herstellen lässt, hochreaktiv und dennoch lagerstabil ist, sich besonders leicht und problemlos insbesondere im Rahmen des Coils-Coatings-Verfahrens applizieren lässt und bei niedrigen Härtungstemperaturen sehr . rasch und ohne Emission flüchtiger organischer Verbindungen ausgehärtet werden kann und Beschichtungen, insbesondere Coil-Coatings, speziell Primerlackierungen, liefert, die auch auf nicht vorbehandelten Metalloberflächen, insbesondere der Oberfläche von Gebrauchsmetallen, wie Zink, Aluminium oder blanker, galvanisierter, elektroverzinkter und phosphatierter Stahl, eine besonders hohe Haftung, eine besonders hohe Zwischenschichthaftung zu den darüber liegenden Beschichtungen und eine hervorragende Korrosionsschutzwirkung, insbesondere gegen Weisskorrosion, haben.

Demgemäß wurde der neue, mit aktinischer Strahlung härtbare, von organischen Lösemitteln im wesentlichen oder völlig freie, flüssige Beschichtungsstoff in Form einer Wasser-in-Öl-Dispersion und eines pH-Werts < 5 gefunden, enthaltend
- (A): mindestens einen Bestandteil, ausgewählt aus der Gruppe bestehend aus niedermolekularen, oligomeren und polymeren organischen Verbindungen, die mindestens eine mit aktinischer Strahlung aktivierbare Gruppe enthalten, sowie luft- und oxidativ trocknenden Alkydharzen,
- (B): mindestens einen sauren Ester von Polyphosphorsäure und mindestens einer Verbindung (b 1), enthaltend mindestens eine Hydroxylgruppe und mindestens eine mit aktinischer Strahlung aktivierbare Gruppe,
- (C): mindestens einen sauren Ester von Monophosphorsäure und mindestens einer Verbindung (c 1), enthaltend mindestens eine Hydroxylgruppe und mindestens eine mit aktinischer Strahlung aktivierbare Gruppe, und
- (D): mindestens ein saures, korrosionshemmendes Pigment auf der Basis von Polyphosphorsäure.

Im Folgenden wird der neue Beschichtungsstoffe als »erfindungsgemäßer Beschichtungsstoff« bezeichnet.

Außerdem wurde das neue Verfahren zur Herstellung des erfindungsgemäßen Beschichtungsstoffs durch Vermischen seiner Bestandteile und Homogenisieren der resultierenden Mischung gefunden, bei dem man
- (1): mindestens ein Pigment (D) in einem Teil von mindestens einem Ester (B), mindestens einem Ester (C), Wasser sowie einem Teil des Bestandteils oder der Bestandteile (A) vermischt und die resultierende Mischung auf einem Mahlaggregat mahlt, wodurch eine Pigmentanreibung (1) resultiert, und
- (2): einen weiteren Teil des Bestandteils oder der Bestandteile (A) sowie einen weiteren Teil von mindestens einem Ester (C) miteinander vermischt und die resultierende Mischung homogenisiert, wodurch die Komplettiermischung (2) resultiert,
- (3): wonach man die Pigmentanreibung (1) und die Komplettiermischung (2) miteinander vermischt und die resultierende Mischung homogenisiert, wodurch der Beschichtungsstoff (3) resultiert.

Im Folgenden wird das neue Verfahren als »erfindungsgemäßes Verfahren« bezeichnet.

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Beschichtungsstoffs und des erfindungsgemäßen Verfahrens gelöst werden konnte.

Insbesondere war es überraschend, dass die erfindungsgemäß bezweckte Korrosionsschutzwirkung des erfindungsgemäßen Beschichtungsstoffs mit Hilfe von Pigmenten (D), die ursprünglich für völlig andere Anwendungszwecke, wie etwa die Härtung von Wasserglas (vgl. Th. Staffel, F. Wahl, S. Weber und R. Glaum, »Kälte und Feuchte - na und? Polymere Aluminiumphosphate als Wasserglashärter«, Farbe & Lack, Jahrgang 108, Heft 10, Seiten 103 bis 109, 2002), vorgesehen waren, erreicht werden konnte.

Noch mehr war es überraschend, dass der erfindungsgemäße Beschichtungsstoff die Nachteile des Standes der Technik nicht mehr länger aufwies, sondern sich leicht herstellen ließ, hochreaktiv und dennoch lagerstabil war, sich besonders leicht und problemlos insbesondere im Rahmen des Coils-Coatings-Verfahrens applizieren ließ und bei niedrigen Härtungstemperaturen sehr rasch und ohne Emission flüchtiger organischer Verbindungen ausgehärtet werden konnte und Beschichtungen, insbesondere Coil-Coatings, speziell Primerlackierungen, lieferte, die auch auf nicht vorbehandelten Metalloberflächen, insbesondere der Oberfläche von Gebrauchsmetallen, wie Zink, Aluminium oder blanker, galvanisierter, elektroverzinkter und phosphatierter Stahl, eine besonders hohe Haftung, eine besonders hohe Zwischenschichthaftung zu den darüber liegenden Beschichtungen und eine hervorragende Korrosionsschutzwirkung, insbesondere gegen Weisskorrosion, hatte.

Der erfindungsgemäße Beschichtungsstoff-ist flüssig, d. h., er enthält zwar feste, nichtflüssige Bestandteile, er ist aber bei Raumtemperatur und unter den üblichen und bekannten Bedingungen der Herstellung, der Lagerung und der Applikation in einem fluiden Zustand, sodass er mit Hilfe der üblichen und bekannten, beim Coil-Coating-Verfahren angewandten Applikationsmethoden verarbeitet werden kann.

Der erfindungsgemäße Beschichtungsstoff liegt als eine Wasser-in-Öl-Dispersion vor, bei der die diskontinuierliche wässrige Phase in der kontinuierlichen organischen Phase feinteilig dispergiert ist. Der Durchmesser der Tröpfchen der wässrigen Phase kann breit variieren; vorzugsweise liegt er bei 10 nm bis 1000 µm, insbesondere 100 nm bis 800 µm. Die Bestandteile des erfindungsgemäßen Beschichtungsstoffs sind ihrer Hydrophilie oder Hydrophobie (vgl. Römpp Online, 2002, »Hydrophobie«, »Hydrophilie«) entsprechend über die wässrige Phase und organischen Phase verteilt oder liegen als separate feste Phase vor.

Der erfindungsgemäße Beschichtungsstoff bzw. seine wässrige Phase weist einen pH-Wert < 5, vorzugsweise < 4 und insbesondere von 3 bis 3,5 auf.

Der erfindungsgemäße Beschichtungsstoff ist im wesentlichen oder völlig frei von organischen Lösemitteln. D. h., dass sein Gehalt an organischen Lösemitteln < 5, vorzugsweise < 3 und bevorzugt < 1 Gew.-% ist. Insbesondere liegt der Gehalt unterhalb der Nachweisgrenzen der üblichen und bekannten qualitativen und quantitativen Nachweismethoden für organische Lösemittel.

Der erfindungsgemäße Beschichtungsstoff enthält mindestens einen Bestandteil, vorzugsweise mindestens zwei und insbesondere mindestens drei Bestandteile, ausgewählt aus der Gruppe, bestehend aus niedermolekularen, oligomeren und polymeren, organischen Verbindungen, die mindestens eine, insbesondere eine oder mindestens zwei, mit aktinischer Strahlung aktivierbare Gruppe(n) enthalten, sowie luft- und oxidativ trocknenden Alkydharzen.

Unter aktinischer Strahlung ist elektromagnetische Strahlung, wie nahes Infrarot (NIR), sichtbares Licht, UV-Strahlung, Röntgenstrahlung oder Gammastrahlung, insbesondere UV-Strahlung, und Korpuskularstrahlung, wie Elektronenstrahlung, Alphastrahlung, Betastrahlung, Protonenstrahlung oder Neutronenstrahlung, insbesondere Elektronenstrahlung, zu verstehen.

Die mit aktinischer Strahlung aktivierbaren Gruppen enthalten mindestens eine, insbesondere eine, mit aktinischer Strahlung aktivierbare Bindung. Hierunter wird eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen oder Kohlenstoff-Kohlenstoff-Dreifach-Bindungen. Von diesen sind die Kohlenstoff-Kohlenstoff-Doppelbindungen und - Dreifachbindungen vorteilhaft und werden deshalb erfindungsgemäß bevorzugt verwendet. Besonders vorteilhaft sind die Kohlenstoff-Kohlenstoff-Doppelbindungen, weswegen sie besonders bevorzugt verwendet werden. Der Kürze halber werden sie im Folgenden als "Doppelbindungen" bezeichnet.

Vorzugsweise sind die Doppelbindungen in Gruppen der allgemeinen Formel I enthalten:

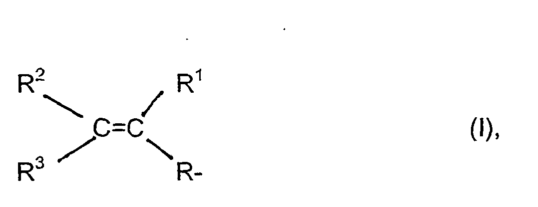

### In der allgemeinen Formel I haben die Variablen die folgende Bedeutung:

- R: Kohlenstoff-Kohlenstoff-Einfachbindung zum Kohlenstoffatom einer Carbonyloxygruppe und zweibindiger organischer Rest, vorzugsweise Kohlenstoff-Kohlenstoff-Einfachbindung; und
- R¹, R² und R³: Wasserstoffatom und organischer Rest;
wobei mindestens zwei der Reste R, R¹, R² und R³ cyclisch miteinander verknüpft sein können.

Beispiele geeigneter zweibindiger organischer Reste R enthalten Alkylen-, Cycloalkylen- und/oder Arylengruppen oder sie bestehen aus diesen. Gut geeignete Alkylengruppen enthalten ein Kohlenstoffatom oder 2 bis 6 Kohlenstoffatome. Gut geeignete Cycloalkylengruppen enthalten 4 bis 10, insbesondere 6, Kohlenstoffatome. Gut geeignete Arylengruppen enthalten 6 bis 10, insbesondere sechs, Kohlenstoffatome.

Beispiele geeigneter organischer Reste R¹, R² und R³ enthalten Alkyl-, Cycloalkyl- und/oder Arylgruppen oder sie bestehen aus diesen. Gut geeignete Alkylgruppen enthalten ein Kohlenstoffatom oder 2 bis 6 Kohlenstoffatome. Gut geeignete Cycloalkylgruppen enthalten 4 bis 10, insbesondere 6, Kohlenstoffatome. Gut geeignete Arylgruppen enthalten 6 bis 10, insbesondere 6, Kohlenstoffatome.

Die organischen Reste R, R¹, R² und R³ können substituiert oder unsubstituiert sein. Die Substituenten dürfen jedoch nicht die Durchführung des erfindungsgemäßen Verfahrens stören und/oder die Aktivierung der Gruppen mit aktinischer Strahlung inhibieren. Vorzugsweise sind die organischen Reste R, R¹, R² und R³ unsubstituiert.

Beispiele für besonders gut geeignete Gruppen der allgemeinen Formel I sind Vinyl-, 1-Methylvinyl-, 1-Ethylvinyl-, Propen-1-yl, Styryl-, Cyclohexenyl-, Endomethylencyclohexyl-, Norbornenyl- und Dicyclopentadienylgruppen, insbesondere Vinylgruppen.

Demnach handelt es sich bei den besonders bevorzugten, mit aktinischer Strahlung aktivierbaren Gruppen um (Meth)Acrylat-, Ethacrylat-, Crotonat-, Cinnamat-, Cyclohexencarboxylat-, Endomethylencyclohexancarboxylat-, Norbornencarboxylat- und Dicyclopentadiencarboxylatgruppen, insbesondere aber (Meth)Acrylatgruppen.

Beispiele gut geeigneter niedermolekularer Verbindungen (A) sind übliche und bekannte Reaktivverdünner (vgl. Römpp Online, 2002, »Reaktivverdünner«). Vorzugsweise werden die Reaktivverdünner aus der Gruppe, bestehend aus Isobornylacrylat, Dicyclopentenyloxyethylacrylat, N-(2-Methacryloyleth-1-yl)ethylenharnstoff, Hydroxybutylacrylat, Hydroxyethylacrylat, Trimethylolpropantriacrylat, Ethylenglykoldiacrylat und Diethylenglykoldiacrylat, ausgewählt. Insbesondere werden alle der genannten Reaktivverdünner (A) eingesetzt.

Oligomere organische Verbindungen (A) enthalten im allgemeinen 2 bis 15 monomere Bausteine; polymere organische Verbindungen (A) enthalten im allgemeinen mehr als 10 monomere Bausteine (vgl. auch Römpp Online, 2002, »Oligomere«, »Polymere«).

Die oligomeren und polymeren organischen Verbindungen (A) können den unterschiedlichsten Oligomer- und Polymerklassen entstammen. Beispiele geeigneter Oligomer- und Polymerklassen sind statistisch, alternierend und/oder blockartig aufgebaute lineare und/oder verzweigte und/oder kammartig aufgebaute Polyadditionsharze, Polykondensationsharze und (Co)Polymerisate von ethylenisch ungesättigten Monomeren. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, verwiesen.

Beispiele gut geeigneter Polyadditionsharze und/oder Polykondensationsharze (A) sind Polyester, Alkyde, Polyurethane, Polylactone, Polycarbonate, Polyether, Epoxidharz-Amin-Addukte, Polyharnstoffe, Polyamide oder Polyimide.

Beispiele gut geeigneter (Co)Polymerisate (A) sind (Meth)Acrylat(co)polymerisate und Polyvinylester, insbesondere (Meth)Acrylat(co)polymerisate.

Besonders bevorzugt werden Oligo- und Polyurethane (A) eingesetzt. Diese sind erhältlich aus üblichen und bekannten Diisocyanaten und Polyisocyanaten und Verbindungen, die mindestens eine, insbesondere eine isocyanatreaktive funktionelle Gruppe und mindestens eine, insbesondere eine, der vorstehend beschriebenen, mit aktinischer Strahlung härtbaren Gruppen enthalten.

Als Diisocyanate und Polyisocyanate kommen grundsätzlich alle der üblichen und bekannten, auf dem Lackgebiet verwendeten aliphatischen, cycloaliphatischen, aliphatisch-cycloaliphatischen, aromatischen, aliphatisch-aromatischen und/oder cycloaliphatisch-aromatischen Diisocyanate und Polyisocyanate und Polyisocyanataddukte in Betracht, welche auch als Lackpolyisocyanate bezeichnet werden.

Beispiele geeigneter Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Dicyclohexylmethan-4,4'-diisocyanat, flüssiges Dicyclohexylmethan-4,4'-diisocyanat eines trans/trans-Gehalts von bis zu 30 Gew.-%, vorzugsweise 25 Gew.-% und insbesondere 20 Gew.-%, das durch Phosgenierung von Isomerengemischen des Bis(4-aminocyclohexyl)methans oder durch fraktionierte Kristallisation von handelsüblichem Bis(4-isocyanatocyclohexyl)methan gemäß den Patentschriften DE 44 14 032 A1, GB 1220717 A, DE 16 18 795 A1 oder DE 17 93 785 A1 erhältlich ist; Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 A und WO 97/49747 A beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, m-Tetramethylxylylendiisocyanat (= 1,3-Bis-(2-isocyanatoprop-2-yl)-benzol, Toluylendiisocyanat oder Diphenylmethandiisocyanat.

Beispiele geeigneter Polyisocyanate auf Basis der vorstehend beschriebenen Diisocyanate sind isocyanatgruppenhaltige Polyurethanpräpolymere, die durch Reaktion von Polyolen mit einem Überschuß an mindestens einem der vorstehend beschriebenen Diisocyanate hergestellt worden sind, und/oder Isocyanurat-, Biuret-, Allophanat-, Iminooxadiazindion-, Urethan-, Harnstoff- und/oder Uretdiongruppen enthaltende Polyisocyanate. Bevorzugt werden Polyisocyanate verwendet, die im statistischen Mittel 2 bis 5 Isocyanatgruppen pro Molekül und Viskositäten von 100 bis 10.000, vorzugsweise 100 bis 5000 mPas aufweisen. Außerdem können die Polyisocyanate in üblicher und bekannter Weise hydrophil oder hydrophob modifiziert sein.

Beispiele geeigneter Herstellungsverfahren sind beispielsweise aus dem Patentschriften CA 2,163,591 A, US-A-4,419,513, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt.

Außerdem kommen die hochviskosen Polyisocyanate, wie sie in der deutschen Patentanmeldung DE 198 28 935 A1 beschrieben werden, in Betracht.

Beispiele geeigneter isocyanatreaktiver funktioneller Gruppen sind Hydroxylgruppen, Thiolgruppen und primäre und sekundäre Aminogruppen, insbesondere Hydroxylgruppen.

Beispiele besonders gut geeigneter Verbindungen, die eine isocyanatreaktive funktionelle Gruppe und eine mit aktinischer Strahlung aktivierbare Gruppe enthalten, sind Monomere, welche mindestens eine Hydroxyl- oder Aminogruppe pro Molekül tragen, wie
- Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, - maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, -monomethacrylat, -monoethacrylat, -monocrotonat, -monomaleinat, -monofumarat oder -monoitaconat; Umsetzungsprodukte aus cyclischen Estern, wie z.B. epsilon-Caprolacton und diesen Hydroxyalkyl- oder -cycloalkylestern;
- olefinisch ungesättigte Alkohole wie Allylalkohol;
- Polyole wie Trimethylolpropanmono- oder diallylether oder Pentaerythritmono-, -di- oder -triallylether;
- Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
- Aminoethylacrylat, Aminoethylmethacrylat, Allylamin oder N-Methyliminoethylacrylat; und/oder
- Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder - cycloalkylestern der (Meth)Acrylsäure und/oder weiterer hydroxylgruppehaltiger Monomere.

Insbesondere wird 4-Hydroxybutylacrylat verwendet.

Die Umsetzung der Diisocyanate und Polyisocyanate mit den Verbindungen mit mindestens einer isocyanatreaktiven funktionellen Gruppe und mindestens einer mit aktinischer Strahlung aktivierbaren Gruppe bietet keine methodischen Besonderheiten, sondern wird beispielsweise, wie in der internationalen Patentanmeldung WO 96/23836 A beschrieben, durchgeführt.

Luft- und oxidativ trocknende Alkydharze (A), wie Leinöl-, Sojaöl-, Safloröl- oder Ricinen-Alkydharze, sind an sich bekannte Verbindungen und werden beispielsweise Römpp Online, 2002, »Alkydharze«, beschrieben. Vorzugsweise werden Alkydharze einer Öllänge oder Ölgehalts von 20 bis 60%, insbesondere 25 bis 60%. 45 bis 65, insbesondere 48 bis 60 Equ.-%, der in den ungesättigten Fettsäureresten des Alkydharzes (A) vorhandenen olefinisch ungesättigten Doppelbindungen sind konjugiert. Wegen seiner Öllänge oder Ölgehalts wird das Alkydharz auch als mittelöliges oder mittelfettes Alkydharz bezeichnet.

Die ungesättigten Fettsäurereste der Alkydharze (A) leiten sich ab von ungesättigten Fettsäuren, wie Lauroleinsäure (Dodecensäure), Myristoleinsäure (Tetradecensäure), Palmitoleinsäure (Hexadecensäure), Ölsäure (Octadecensäure), Gadoleinsäure (Eicosensäure), Erucasäure (Docosensäure), Ricinolsäure (12-Hydroxy- octadecensäure), Linolsäure (Octadecensäure), Linolensäure (Octadecatriensäure), Elaeostearinsäure, Eicosapentensäure oder Docosahexaensäure, die in pflanzlichen und tierischen Ölen, wie Rizinusöl, dehydratisiertes Rizinusöl (Castor Oil), Kokosöl, Palmöl, Erdnussöl, Baumwollöl, Sojabohnenöl, Saffloröl, Sonnenblumenöl, OH-Sonnenblumenöl, Leinöl, erucareiches und erucaarmes Rüböl, Holzöl, Oiticicaöl, Schmalz, Talk, Spermöl und Heringsöl, vorkommen bzw. sich hieraus gewinnen lassen.

Die ungesättigten Fettsäuren sind handelsübliche Produkte und werden beispielsweise von der Firma UNIQEMA unter den Marken Prifac ® oder Dedico ®, der Firma Henkel unter der Marke Isomerginsäure ® oder der Firma Akzo unter der Marke Nouracid ® vertrieben.

Der Gehalt an Fettsäureresten (Öllange) und an Fettsäureresten mit konjugierten Doppelbindungen kann vom Fachmann leicht über die Menge an Fettsäuren insgesamt und über das Verhältnis von olefinisch ungesättigten Fettsäuren ohne konjugierte Doppelbindungen zu olefinisch ungesättigten Fettsäuren mit konjugierten Doppelbindungen eingestellt werden.

Bekanntermaßen werden die Alkydharze (A) aus Polyolen und mehrwertigen Carbonsäuren und den vorstehend genannten, oxidativ trocknenden Fettsäuren hergestellt.

Beispiele geeigneter mehrwertiger Alkohol sind Glyzerin, Pentaerythrit, Trimethylolethan und Trimethylolpropan.

Beispiele geeigneter mehrwertiger Carbonsäuren sind Tetra- und Hexahydrophtalsäure, Methylnadic Acid, Methylendomethylen- und 3,6-Endomethylentetrahydrophtalsäure sowie die entsprechenden Anhydride dieser Säuren.

Die Alkydharze (A) können auch mit mindestens einer Modifizierungskomponente, wie Öle, Naturharze, Phenolharze, Acrylatharze, Styrol, Epoxidharze, Siliconharze oder Isocyanate, modifiziert sein.

Die Alkydharze (A) sind handelsübliche Produkte und werden beispielsweise unter der Marke Alkydal ® R 35 von der Firma Bayer AG, Italkyd ® R35 von der Firma Multi Resin vertrieben. Vorzugsweise sind die Alkydharze (A) im vorstehend beschriebenen Sinne lösemittelfrei bzw. beispielsweise werden durch Destillation von organischen Lösemitteln befreit.

Besonders vorteilhafte erfindungsgemäße Beschichtungsstoffe enthalten die vorstehend beschriebenen Reaktivverdünner (A), die Oligomeren und Polymeren (A) und die Alkydharze (A).

Der erfindungsgemäße Beschichtungsstoff enthält mindestens einen, insbesondere einen, sauren Ester von Polyphosphorsäure und mindestens einer Verbindung (b 1), enthaltend mindestens eine, insbesondere eine, Hydroxylgruppe und mindestens eine mit aktinischer Strahlung aktivierbare Gruppe. Beispiele geeigneter, mit aktinischer Strahlung aktivierbarer Gruppen sind die vorstehend beschriebenen. Der Gehalt der Polyphosphorsäure an Diphosphorpentoxid kann breit variieren; vorzugsweise liegt er bei 60 bis 95, bevorzugt 70 bis 95 und insbesondere 70 bis 90 Gew.-%.

Der erfindungsgemäße Beschichtungsstoff enthält des Weiteren mindestens einen, insbesondere einen, sauren Ester von Monophosphorsäure und mindestens einer Verbindung (c 1), enthaltend mindestens eine Hydroxylgruppe und mindestens eine mit aktinischer Strahlung aktivierbare Gruppe. Beispiele geeigneter, mit aktinischer Strahlung aktivierbarer Gruppen sind die vorstehend beschriebenen.

Gut geeignete Verbindungen (b 1) und (c 1) werden aus der Gruppe, bestehend aus Carbonsäureester der allgemeinen Formel II: 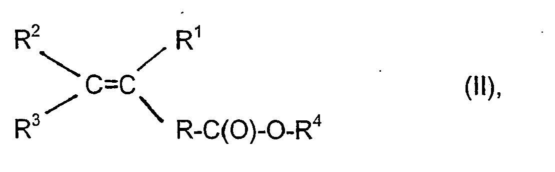 worin die Variablen R, R¹, R² und R³ die vorstehend angegebene Bedeutung haben und die Variable R⁴ für einen hydroxylgruppenhaltigen, einbindigen organischen Rest steht;
ausgewählt.

Vorzugsweise enthält der einbindige organische Rest R⁴ mindestens einen Rest, ausgewählt aus der Gruppe, bestehend aus hydroxylgruppenhaltigen Alkyl-, Cycloalkyl- und Arylresten, oder er besteht hieraus. Bevorzugt werden Alkylreste R⁴ eingesetzt. Besonders bevorzugt ist der hydroxylgruppenhaltige Alkylrest R⁴ ein Hydroxyethylrest, ein 2- oder 3-Hydroxypropylrest, ein 4-Hydroxybutylrest oder ein omega-Hydroxyoligocaprolactylrest.

Beispiele besonders gut geeigneter Verbindungen (b 1) sind 4-Hydroxybutylacrylat und Oligocaprolactonmonoacrylat, vorzugsweise mit einem zahlenmittleren Molekulargewicht von 250 bis 500. Beispiele besonders gut geeigneter Ester (B) der Polyphosphorsäure sind 4-Acryloylbut-1-yl-polyphosphat und omega-Acryloyl-oligocaprolacton-1-yl-polyphosphat.

Beispiele besonders gut geeigneter Verbindungen (c 1) sind Hydroxypropylmethacrylat und Hydroxyethylmethacrylat. Beispiele besonders gut geeigneter Ester (C) der Monophosphorsäure sind 2-Methacryloyleth-1-yl-phoshat und 3-Methacryloylprop-1-yl-phoshat. Die Ester (C) sind handelsübliche Produkte die unter der Marke Sipomer ® von der Firma Rhodia als Netzmittel oder Emulgatoren vertrieben werden.

Nicht zuletzt enthält der erfindungsgemäße Beschichtungsstoff mindestens ein, insbesondere einen, saures, korrosionshemmendes Pigment auf der Basis von Polyphosphorsäure. Vorzugsweise werden Aluminium- und Zinkpolyphosphate verwendet. Aluminiumpolyphosphate sind übliche und bekannte Produkte und werden beispielsweise unter der Marke Targon ® HS von BK Giulini vertrieben. Zinkpolyphosphate sind aus Polyphosphorsäure und Zinkoxid erhältlich. Vorzugsweise werden sie als wässrige Suspension eingesetzt.

Darüber hinaus kann der erfindungsgemäße Beschichtungsstoff noch mindestens einen Zusatzstoff (E), insbesondere mindestens zwei Zusatzstoffe (E), in wirksamen Mengen enthalten.

Vorzugsweise wird Zusatzstoff (E) aus der Gruppe, bestehend aus Polyphosphorsäure, Trockenstoffen, von den Pigmenten (D) verschiedenen, organischen und anorganischen, farbigen und unbunten, optisch effektgebenden, elektrisch leitfähigen, magnetisch abschirmenden und fluoreszierenden Pigmenten, transparenten und opaken, organischen und anorganischen Füllstoffen, Nanopartikeln, Antiabsetzmitteln, von den Bestandteilen (A) verschiedenen, oligomeren und polymeren Bindemitteln, UV-Absorbern, Lichtschutzmitteln, Radikalfängern, Photoinitiatoren, Entlüftungsmitteln, Slipadditiven, Polymerisationsinhibitoren, Entschäumern, von den Bestandteilen (C) verschiedenen Emulgatoren und Netzmitteln, Haftvermittlern, Verlaufmitteln, Filmbildehilfsmitteln, rheologiesteuernden Additiven und Flammschutzmitteln; ausgewählt.

Besonders vorteilhafte Beschichtungsstoffe enthalten Polyphosphorsäure, Trockenstoffe, Photoinitiatoren, Nanopartikel, wie Aerosile, als Antiabsetzmittel und von den Bestandteilen (C) verschiedenen Emulgatoren und Netzmittel.

Der Gehalt des erfindungsgemäßen Beschichtungsstoffs an den vorstehend beschriebenen Bestandteile kann breit variieren und richtet sich nach den Erfordernissen des Einzelfalls.

Vorzugsweise enthält der erfindungsgemäße Beschichtungsstoff, bezogen auf den Festkörper, d. h. die Summe der Bestandteile, die die aus dem Beschichtungsstoff hergestellten Beschichtungen aufbauen, 1 bis 10, bevorzugt 1,5 bis 8 insbesondere 2 bis 6 Gew.-% an organisch gebundenem Diphosphorpentoxid. Vorzugsweise enthält der erfindungsgemäße Beschichtungsstoff, bezogen auf den Festkörper 5 bis 30, bevorzugt 8 bis 25 und insbesondere 10 bis 20 Gew.-% an organisch gebundenem Diphosphorpentoxid.

Vorzugsweise liegt der Festkörpergehalt des erfindungsgemäßen Beschichtungsstoffs, jeweils bezogen auf seine Gesamtmenge, bei 70 bis 99, bevorzugt 75 bis 95 und insbesondere 70 bis 95 Gew.-%. Vorzugsweise liegt der Wassergehalt des erfindungsgemäßen Beschichtungsstoffs, jeweils bezogen auf seine Gesamtmenge, bei 1 bis 30, bevorzugt 5 bis 25 und insbesondere 5 bis 30 Gew.-%.

Vorzugsweise liegt das Mengenverhältnis von Pigment (D) zu Bestandteil (A) bei (D) : (A) = 1 : 0,5 bis 1 : 10, bevorzugt 1 : 1 bis 1: 8 und insbesondere 1 : 1,5 bis 1 : 6.

Besonders vorteilhafte erfindungsgemäße Beschichtungsstoffe enthalten, jeweils bezogen auf ihre Festkörper,
- vorzugsweise 5 bis 35, bevorzugt 6 bis 30 und insbesondere 7 bis 25 Gew.-% eines Alkydharzes (A),
- vorzugsweise 5 bis 35, bevorzugt 6 bis 30 und insbesondere 7 bis 25 Gew.-% eines Oligourethans (A),
- vorzugsweise 15 bis 40, bevorzugt 70 bis 35 insbesondere 20 bis 30 Gew.-% eines Gemischs von Reaktivverdünnern (A), vorzugsweise bestehend aus Isobornylacrylat, Dicyclopentenyloxyethylacrylat, N-(2-Methacryloyleth-1-yl)ethylenharnstoff, Hydroxybutylacrylat, Hydroxyethylacrylat, Trimethylolpropantriacrylat, Ethylenglykoldiacrylat und Diethylenglykoldiacrylat,
- vorzugsweise 1 bis 10, bevorzugt 2 bis 8 und insbesondere 3 bis 7 Gew.-% eines Esters (B),
- vorzugsweise 0,1 bis 3, bevorzugt 0,2 bis 2 insbesondere 0,3 bis 1,5 Gew.-% eines Esters (C),
- vorzugsweise 5 bis 40, bevorzugt 6 bis 35 und insbesondere 7 bis 30 Gew.-% eines Pigments (D),
- vorzugsweise 0,1 bis 3, bevorzugt 0,2 bis 2 insbesondere 0,3 bis 1,5 Gew.-% eines von (C) verschiedenen Netzmittels (E),
- vorzugsweise 0,01 bis 1, bevorzugt 0,02 bis 0,8 und insbesondere 0,03 bis 0,7 Gew.-% Nanopartikel (E),
- vorzugsweise 1 bis 10, bevorzugt 1,5 bis 9 besonderer 2 bis 8 Gew.-% Polyphosphorsäure (E),
- vorzugsweise 1 bis 10, bevorzugt 1,5 bis 9 und insbesondere 2 bis 8 Gew.-% eines Photoinitiators (E) und
- vorzugsweise 0,1 bis 3, bevorzugt 0,2 bis 2,5 und insbesondere 0,3 bis 2 Gew.-% eines Trockenstoffs (E).

Die Herstellung der Komponenten (I) und (II) erfolgt vorzugsweise durch Vermischen der vorstehend beschriebenen Bestandteile in geeigneten Mischaggregaten wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer. Vorzugsweise wird hierbei unter Ausschluss von Licht einer Wellenlänge λ < 550 nm oder unter völligem Ausschluss von Licht gearbeitet, um eine vorzeitige Vernetzung der Komponente (I) und gegebenenfalls einer mit aktinischer Strahlung aktivierbaren Komponente (II) zu verhindern.

Die Herstellung des erfindungsgemäßen Beschichtungsstoffs erfolgt vorzugsweise durch Vermischen der vorstehend beschriebenen Bestandteile in geeigneten Mischaggregaten wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer. Vorzugsweise wird hierbei unter Ausschluss von Licht einer Wellenlänge λ < 550 nm oder unter völligem Ausschluss von Licht gearbeitet, um eine vorzeitige Vernetzung zu verhindern.

Für den erfindungsgemäßen Beschichtungsstoff ist es von Vorteil, wenn er nach dem erfindungsgemäßen Verfahren hergestellt wird. Bei dem erfindungsgemäßen Verfahren wird
(1) mindestens ein Pigment (D) mit einem Teil von mindestens einem Ester (B), mindestens einem Ester (C), Wasser sowie einem Teil des Bestandteils oder der Bestandteile (A) vermischt und die resultierenden Mischung auf einem Mahlaggregat gemahlen, wodurch eine Pigmentanreibung (1) resultiert, und
(2) ein weiterer Teil des Bestandteils oder der Bestandteile (A) sowie ein weiterer Teil von mindestens einem Ester (C) miteinander vermischt und die resultierende Mischung homogenisiert, wodurch die Komplettiermischung (2) resultiert,
(3) wonach man die Pigmentanreibung (1) und die Komplettiermischung (2) miteinander vermischt und die resultierende Mischung homogenisiert, wodurch der Beschichtungsstoff (3) resultiert.

Für das Vermischen und Homogenisieren können die vorstehend beschriebenen Mischaggregate verwendet werden. Vorzugsweise wird die Pigmentanreibung (1) bis zu einer Hegman-Feinheit von 1 bis 10, bevorzugt 1,5 bis 8 und insbesondere 2 bis 4 µm gemahlen. Dabei können die üblichen und bekannten Mahlaggregate, wie Perlmühlen und Rührwerksmühlen, angewandt werden.

Vorzugsweise werden die Pigmentanreibung (1) und die Komplettiermischung (2) in einem Mengenverhältnis von (1) : (2) = 3 : 1 bis 0,33 : 1, bevorzugt 2,5 : 1 bis 1 : 1 und insbesondere 2 : 1 bis 1,2 : 1 miteinander vermischt.

Vorzugsweise werden zur Herstellung der Pigmentanreibung (1) als Bestandteile (A) mindestens eines der vorstehend beschriebenen Alkydharze und mindestens eine, insbesondere mindestens zwei, der vorstehend beschriebenen, niedermolekularen, organischen Verbindungen verwendet.

Vorzugsweise werden zur Herstellung der Komplettiermischung (2) als Bestandteile (A) mindestens eines der vorstehend beschriebenen Alkydharze, mindestens eine, insbesondere mindestens zwei, der vorstehend beschriebenen niedermolekularen, organischen Verbindungen und mindestens eine, insbesondere eine, der vorstehend beschriebenen oligomeren oder polymeren, organischen Verbindungen verwendet.

Des Weiteren kann zur Herstellung der Pigmentanreibung (1) und der Komplettiermischung (2) mindestens einer der vorstehend beschriebenen Zusatzstoffe (E) verwendet werden. Vorzugsweise werden zur Herstellung der Pigmentanreibung (1) als Zusatzstoffe (E) mindestens ein, insbesondere ein, vom Ester (C) verschiedener Emulgator oder mindestens ein, insbesondere ein, von (C) verschiedenes Netzmittel sowie mindestens eine, insbesondere eine, Art von Nanopartikeln verwendet. Bevorzugt werden zur Herstellung der Komplettiermischung (2) als Zusatzstoffe (E) Polyphosphorsäure, mindestens ein, insbesondere ein, Photoinitiator und mindestens ein, insbesondere ein, Trockenstoff verwendet.

Bei dem erfindungsgemäßen Verfahren werden die Bestandteile (A) bis (E) vorzugsweise in solchen Mengen eingesetzt, dass die vorstehend beschriebenen bevorzugten Mengenverhältnisse der Bestandteile des erfindungsgemäßen Beschichtungsstoffs resultieren.

Die erfindungsgemäßen Beschichtungsstoffe sind hervorragend für die Herstellung von Beschichtungen aller Art geeignet. Insbesondere sind sie als Coil-Coating-Lacke geeignet. Außerdem eignen sie sich hervorragend für die Herstellung von Beschichtungen auf allen Gebrauchsmetallen, insbesondere auf blankem Stahl, galvanisiertem, elektroverzinktem und phosphatiertem Stahl, Zink und Aluminium, auf Beschichtungen, insbesondere Primerlackierungen, und auf SMC (Sheet Moulded Compounds) und BMC (Bulk Moulded Compounds). Die erfindungsgemäßen Beschichtungen sind dabei hervorragend als Klarlackierungen, Decklackierungen, temporäre oder permanente Schutzschichten, Primerlackierungen, Versiegelungen und Antifingerabdruck-Lackierungen, insbesondere aber als Primerlackierungen, geeignet.

Überraschenderweise erfüllen die erfindungsgemäßen Lackierungen, insbesondere die erfindungsgemäßen Primerlackierungen, auch auf nicht vorbehandelten Metalloberflächen, beispielsweise auf nicht vorbehandelten HDG (hot dipped galvanized)-Stahl, mindestens die Anforderungen der Klasse IV der Spezifikation der Firma Usinor für Bauteile für die Außenanwendung insbesondere hinsichtlich der Haftung, der Flexibilität, der Härte, der Chemikalienbestädnigkeit, der Zwischenschichthaftung und der Korrosionsschutzwirkung, in vollem Umfang.

Methodisch weist die Applikation der erfindungsgemäßen Beschichtungsstoffe keine Besonderheiten auf, sondern kann durch alle üblichen Applikationsmethoden, wie z.B. Spritzen, Rakeln, Streichen, Gießen, Tauchen, Träufeln oder Walzen erfolgen. Generell empfiehlt es sich, unter Ausschluss von aktinischer Strahlung zu arbeiten, um eine vorzeitige Vernetzung der erfindungsgemäßen Beschichtungsstoffe zu vermeiden. Nach der Applikation kann das in dem erfindungsgemäßen Beschichtungsstoff enthaltene Wasser in einfacher Weise verdampft werden, was auch als flash-off bezeichnet wird. Vorzugsweise geschieht dies durch die kurzzeitige induktive Aufheizung der Metallsubstrate.

Für die Härtung der applizierten erfindungsgemäßen Beschichtungsstoffe mit aktinischer Strahlung kommen Strahlenquellen wie Quecksilberhoch- oder -niederdruckdampflampen oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735 A1, Spalte 10, Zeile 31 bis Spalte 11, Zeile 22, von R. Stephen Davidson in »Exploring the Science, Technology and Applications of U.V. and E.B. Curing«, Sita Technology Ltd., London, 1999, Chapter I, »An Overview«, Seite 16, Figure 10, oder von Dipl.-Ing. Peter Klamann in »eltosch System-Kompetenz, UV-Technik, Leitfaden für Anwender«, Seite 2, Oktober 1998, beschrieben.

Vorzugsweise wird bei der Bestrahlung eine Strahlendosis von 100 bis 6.000, vorzugsweise 200 bis 3.000, bevorzugt 300 bis 2.500 und besonders bevorzugt 500 bis 2.000 mJcm⁻² eingesetzt.

Dabei kann die Strahlenintensität breit variieren. Sie richtet sich insbesondere nach der Strahlendosis einerseits und der Bestrahlungsdauer andererseits. Die Bestrahlungsdauer richtet sich bei einer vorgegebenen Strahlendosis nach der Band- oder Vorschubgeschwindigkeit der Substrate in der Bestrahlungsanlage und umgekehrt. Vorzugsweise liegt die Strahlenintensität bei 1x10° bis 3x10⁵, bevorzugt 2x10° bis 2x10⁵, besonders bevorzugt 3x10° bis 2,5x10⁵ und insbesondere 5x10° bis 2x10⁵ Wm⁻².

Es ist ein besonderer Vorteil des erfindungsgemäßen Beschichtungsstoffs, dass die Strahlenhärtung durch die oxidative Härtung an der Luft unterstützt werden kann. Es ist noch ein weiterer besonderer Vorteil des erfindungsgemäßen Beschichtungsstoffs, dass er auch nur partiell gehärtet und in diesem Zustand mit mindestens einem weiteren, insbesondere mit einem mit aktinischer Strahlung härtbaren Beschichtungsstoff, überlackiert werden kann, wonach man alle applizierten Schichten gemeinsam mit aktinischer Strahlung härtet. Hierdurch werden die Prozesszeiten weiter verkürzt, und die Zwischenschichthaftung wird weiter verbessert. Insgesamt ist es aufgrund der Verwendung des erfindungsgemäßen Beschichtungsstoffs nicht mehr notwendig, beim Coil-Coating-Verfahren die Metallfolien auf PMT von 240 °C und mehr zu erhitzen. Es erübrigt sich auch das Absaugen und Entsorgen flüchtiger organischer Verbindungen, sodass der apparative, sicherheitstechnische und energetische Aufwand signifikant reduziert werden kann.

Die resultierenden erfindungsgemäßen Beschichtungen sind hochflexibel, ohne Beschädigung sehr stark verformbar, chemikalienbeständig, witterungsbeständig, schwitzwasser- und salzwasserbeständig sowie von hoher Haftung zu den Substraten und anderen Beschichtungen. Bei alledem vermitteln sie noch einen hervorragenden optischen Eindruck.

### Beispiele

### Beispiel 1

### Die Herstellung des Beschichtungsstoffs 1

Für die Herstellung des Beschichtungsstoffs 1 wurde zunächst eine Mischung aus 18,9 Gewichtsteilen eines Alkydharz einer Öllänge von 28%, eines massenmittleren Molekulargewichts von 10.000 bis 12.000 Dalton und einer Uneinheitlichkeit des Molekulargewichts < 5 auf Basis von Hexahydrophtalsäure und modifiziertem Sonnenblumenöl FA mit einem Anteil an konjugierten Doppelbindungen von 48 bis 62 Equ.-%, bezogen auf die Anzahl der vorhandenen Doppelbindungen (Edenor ® 6010 der Firma Henkel), 12,6 Gewichtsteilen Isobornylacrylat, 2 Gewichtsteilen Dicyclopentenyloxyethylacrylat, 9 Gewichtsteilen eines Polyphosphorsäureesters von 4-Hydroxybutylacrylat (hergestellt durch die Umsetzung von 80 Gewichtsteilen 4-Hydroxybutylacrylat und 20 Gewichtsteilen Polyphosphorsäure eines Gehalts an Diphosphorpentoxid von 84 Gew.-%; Überschuss an 4-Hydroxybutylacrylat: 20 Gew.-%), 17,5 Gewichtsteilen deionisiertes Wasser, 7 Gewichtsteilen Laromer ® PE 55 WN (Monomergemisch aus Trimethylolpropantriacrylat, Ethylenglykoldiacrylat, 2-Hydroxyethylacrylat und Diethylenglykoldiacrylat, 50-prozentig in Wasser, Firma BASF Aktiengesellschaft), 1,5 Gewichtsteilen Rheolate ® 2001 (handelsübliches Netzmittel der Firma Elementis), 2 Gewichtsteilen 3-Methacryloylprop-1-yl-phoshat (Sipomer ® DV 6661, handelsübliches Netzmittel der Firma Rhodia) und Aerosil ® 200 (handelsübliches Antiabsetzmittel der Firma Degussa) hergestellt. Die Mischung wurde in einem Ultraturrax während 20 Minuten bei einer Drehzahl von 1.800 homogenisiert.

Der Mischung wurden 30 Gewichtsteile eines Aluminiumpolyphosphats (Targon ® HS der Firma BK Giulini) zugesetzt. Die resultierende Pigmentanreibung wurde in einer Perlmühle auf eine Hegman-Feinheit von 2 bis 4 µm gemahlen.

Parallel dazu wurde eine Komplettiermischung aus 7,2 Gewichtsteilen des oben beschriebenen Alkydharzes, 4,8 Gewichtsteilen Isobornylacrylat, 35 Gewichtsteilen des oben beschriebenen Polyphosphorsäureesters von 4-Hydroxybutylacrylat, 5,5 Gewichtsteilen Polyphosphorsäure (Gehalt an Diphosphorpentoxid: 84 Gew.-%), 28 Gewichtsteilen eines Oligourethans, hergestellt aus einem modifizierten Polyisocyanat-Präpolymer auf Diphenylmethandiisocyanat-Basis (Desmodur ® 2010 der Firma Bayer AG) und 4-Hydroxybutylacrylat, 12 Gewichtsteilen Dicyclopentenyloxyethylacrylat, 5,5 Gewichtsteilen Irgacure ® 184 (handelsüblicher Photoinitiator der Firma Ciba Specialty Chemicals), 1,25 Gewichtsteilen Kobaltoctoat und 2,5 Gewichtsteilen N-(2-Methacryloyleth-1-yl)ethylenharnstoff hergestellt. 62,5 Gewichtsteile der Pigmentanreibung wurde mit 37,5 Gewichtsteilen der Komplettiermischung vermischt, wonach man den resultierenden Beschichtungsstoff 1 homogenisierte.

Der Beschichtungsstoff 1 wies einen Festkörpergehalt von 85 Gew.-%, ein Pigment/Bindemittel-Verhältnis von 1 : 3, einen pH-Wert von 3, organisch gebundenes Diphosphorpentoxid in einer Menge von 4 Gew.-%, bezogen auf den Festkörper, und anorganisch gebundenes Diphosphorpentoxid in einer Menge von 17 Gew.-%, bezogen auf den Festkörper, auf. Der Beschichtungsstoff 1 war unter Ausschluss von aktinischer Strahlung mindestens einen Monat lang völlig lagerstabil. Er war hervorragend für die Herstellung von Primerlackierungen geeignet.

### Beispiel 2

### Die Herstellung des Beschichtungsstoffs 2

Beispiel 1 wurde wiederholt, mit dem Unterschied, dass
- an Stelle von 17,5 Gewichtsteilen deionisiertem Wasser 9 Gewichtsteile und
- an Stelle von 30 Gewichtsteilen Aluminiumpolyphosphat 40 Gewichtsteile Zinkpolyphosphat (75 Gew.-% in Wasser)
   verwendet wurden.

Der Beschichtungsstoff 2 wies ebenfalls einen Festkörpergehalt von 85 Gew.-%, ein Pigment/Bindemittel-Verhältnis von 1 : 3, einen pH-Wert von 3, organisch gebundenes Diphosphorpentoxid in einer Menge von 4 Gew.-%, bezogen auf den Festkörper, und anorganisch gebundenes Diphosphorpentoxid in einer Menge von 17 Gew.-%, bezogen auf den Festkörper, auf. Der Beschichtungsstoff 2 war unter Ausschluss von aktinischer Strahlung mindestens einen Monat lang völlig lagerstabil. Er war hervorragend für die Herstellung von Primerlackierungen geeignet.

### Beispiele 3 bis 8

### Die Herstellung von Primerlackierungen mit Hilfe des Beschichtungsstoffs 1 gem. Beispiel 1

Als Substrate wurden nicht vorbehandelten Stahlbleche aus HDG(hot dipped galvanized)-Stahl der Firma Chemetall verwendet.

Bei Beispiel 3 wurde der Beschichtungsstoff 1 in einer Schichtdicke von 4 bis 6 µm aufgetragen. Das darin enthaltene Wasser wurde während einer Minute bei 80 °C verdampft. Die resultierende Schicht wurde mit UV-Strahlung einer Dosis von 1.000 mJcm⁻² gehärtet.

Bei Beispiel 4 wurde der Beschichtungsstoff 1 in einer Schichtdicke von 1 bis 2 µm aufgetragen. Das darin enthaltene Wasser wurde während einer Minute bei 80 °C verdampft. Die resultierende Schicht wurde mit UV-Strahlung einer Dosis von 300 mJcm⁻² partiell gehärtet. Die partiell gehärtete Schicht wurde mit dem Beschichtungsstoff 1 in einer Schichtdicke von 4 bis 6 µm beschichtet. Das darin enthaltene Wasser wurde ebenfalls während einer Minute bei 80 °C verdampft. Anschließend wurden die beiden Schichten mit UV-Strahlung einer Dosis von 1.000 mJcm⁻² vollständig gehärtet.

Bei Beispiel 5 wurde der Beschichtungsstoff 1 in einer Schichtdicke von 1 bis 2 µm aufgetragen. Das darin enthaltene Wasser wurde während einer Minute bei 80 °C verdampft. Die resultierende Schicht wurde mit UV-Strahlung einer Dosis von 300 mJcm⁻² partiell gehärtet. Die partiell gehärtete Schicht wurde mit einem handelsüblichen, lösemittelfreien, UVhärtbaren Klarlack der Reihe CD 97 der Firma BASF Coatings AG mit einer Schichtdicke von 4 bis 5 µm beschichtet. Anschließend wurden die beiden Schichten mit UV-Strahlung einer Dosis von 1.000 mJcm⁻² vollständig gehärtet.

Alle Beschichtungen der Beispiele 3 bis 5 wiesen einen hervorragenden optischen Gesamteindruck auf.

Für die Beispiele 6 bis 8 wurden die Beschichtungen der Beispiele 3 bis 5 mit einem handelsüblichen, lösemittelhaltigen Coil-Coating-Decklack der Reihe CD 27 der Firma BASF Coatings AG beschichtet. Die Decklackschichten wurden thermisch gehärtet.

Die beschichteten Probetafeln der Beispiele 3 bis 8 wurden angeritzt und dem Salzsprühtest unterworfen. Die Probetafeln der Beispiele 3 bis 5 zeigten nach 168 Stunden noch keinerlei nachteilige Veränderungen, wie Weisskorrosion oder Delamination. Die Probetafeln der Beispiele 6 bis 8 zeigten nach 504 Stunden auch noch keine nachteiligen Veränderungen, wie Weisskorrosion oder Delamination. Dies untermauerte, dass die Primerlackierungen eine hervorragende Korrosionsschutzwirkung aufwiesen.

Alle Beschichtungen der Beispiele 3 bis 7 konnten problemlos und ohne Beschädigung verformt werden (T-Bend-Test: T1-1,5). Die Verformbarkeit der Beschichtung des Beispiels 8 war noch besser (T-Bend-Test: T0-0,5).

Die Beschichtungen der Beispiele 3 bis 7 erfüllten die Anforderungen der Klasse IV der Spezifikation der Firma Usinor für Bauteile für die Außenanwendung; die Beschichtung des Beispiels 8 erfüllte sogar die Anforderungen der Klasse VI Spezifikation.

### Beispiele 9 bis 14

### Die Herstellung von Primerlackierungen mit Hilfe des Beschichtungsstoffs 2 gem. Beispiel 2

Für die Beispiele 9 bis 14 wurden die Beispiele 3 bis 8 wiederholt, mit dem Unterschied, dass an Stelle des Beschichtungsstoffs 1 gem. Beispiel 1 der Beschichtungsstoff 2 gem. Beispiel 2 verwendet wurde. Es wurden die gleichen hervorragenden Ergebnisse wie bei den Beispielen 3 bis 8 erhalten.

## Patentansprüche

1. Mit aktinischer Strahlung härtbarer, von organischen Lösemitteln im wesentlichen oder völlig freier, flüssiger Beschichtungsstoff in Form einer Wasser-in-Öl-Dispersion und eines pH-Werts < 5, enthaltend
(A) mindestens einen Bestandteil, ausgewählt aus der Gruppe bestehend aus niedermolekularen, oligomeren und polymeren organischen Verbindungen, die mindestens eine mit aktinischer Strahlung aktivierbare Gruppe enthalten, sowie luft- und oxidativ trocknenden Alkydharzen,
(B) mindestens einen sauren Ester von Polyphosphorsäure und mindestens einer Verbindung (b 1), enthaltend mindestens eine Hydroxylgruppe und mindestens eine mit aktinischer Strahlung aktivierbare Gruppe,
(C) mindestens einen sauren Ester von Monophosphorsäure und mindestens einer Verbindung (c 1), enthaltend mindestens eine Hydroxylgruppe und mindestens eine mit aktinischer Strahlung aktivierbare Gruppe, und
(D) mindestens ein saures, korrosionshemmendes Pigment auf der Basis von Polyphosphorsäure.

2. Beschichtungsstoff nach Anspruch 1, **dadurch gekennzeichnet, dass** er, bezogen auf den Festkörper, 1 bis 10 Gew.-% an organisch gebundenem P₂O₅ enthält.

3. Beschichtungsstoff nach Anspruch 1 oder 2, **dadurch gekennzeichnet, dass** er, bezogen auf den Festkörper, 5 bis 30 Gew.-% an anorganisch gebundenem P₂O₅ enthält.

4. Beschichtungsstoff nach einem der Ansprüche 1 bis 3, **dadurch gekennzeichnet, dass** das Mengenverhältnis von Pigment (D) zu Bestandteil (A) bei 1 : 0,5 bis 1 : 10 liegt.

5. Beschichtungsstoff nach einem der Ansprüche 1 bis 4, **dadurch gekennzeichnet, dass** er einen Festkörpergehalt von 70 bis 99 Gew.-% hat.

6. Beschichtungsstoff nach einem der Ansprüche 1 bis 5, **dadurch gekennzeichnet, dass** das Pigment (D) aus der Gruppe, bestehend aus saueren Aluminium- und Zinkpolyphoshaten, ausgewählt wird.

7. Beschichtungsstoff nach einem der Ansprüche 1 bis 6, **dadurch gekennzeichnet, dass** die niedermolekulare, organische Verbindung (A) ein Reaktivverdünner ist.

8. Beschichtungsstoff nach einem der Ansprüche 1 bis 7, **dadurch gekennzeichnet, dass** die oligomere oder polymere Verbindung (A) ein Oligo- oder Polyurethan ist.

9. Beschichtungsstoff nach einem der Ansprüche 1 bis 8, **dadurch gekennzeichnet, dass** das luft- und oxidativ trocknende Alkydharz
(A) eine Öllänge von 20 bis 60%, bezogen auf das Alkydharz (A), hat, wobei 45 bis 65 Equ.-% der in den ungesättigten Fettsäureresten vorhandenen olefinisch ungesättigten Doppelbindungen konjugiert sind,

10. Beschichtungsstoff nach einem der Ansprüche 1 bis 9, **dadurch gekennzeichnet, dass** die mit aktinischer Strahlung aktivierbare Gruppe mindestens eine mit aktinischer Strahlung aktivierbare Bindung enthält.

11. Beschichtungsstoff nach Anspruch 10, **dadurch gekennzeichnet, dass** die aktinische Strahlung elektromagnetische Strahlung oder Korpuskularstrahlung ist.

12. Beschichtungsstoff nach Anspruch 11, **dadurch gekennzeichnet, dass** die elektromagnetische Strahlung nahes Infrarot (NIR), sichtbares Licht, UV-Strahlung, Röntgenstrahlung und Gammastrahlung und die Korpuskularstrahlung Elektronenstrahlung, Protonenstrahlung, Alphastrahlung, Betastrahlung und Neutronenstrahlung umfasst.

13. Beschichtungsstoff nach einem der Ansprüche 1 bis 12, **dadurch gekennzeichnet, dass** die mit aktinischer Strahlung aktivierbare Bindung eine Kohlenstoff-Kohlenstoff-Doppelbindung und/oder - Dreifachbindung ist.

14. Beschichtungsstoff nach Anspruch 13, **dadurch gekennzeichnet, dass** die mit aktinischer Strahlung aktivierbare Bindung eine Kohlenstoff-Kohlenstoff-Doppelbindung ist.

15. Beschichtungsstoff nach Anspruch 14, **dadurch gekennzeichnet, dass** die mit aktinischer Strahlung aktivierbare Bindung in Gruppen der allgemeinen Formel I: 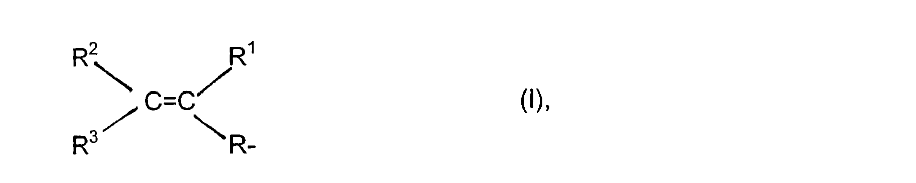 worin die Variablen die folgende Bedeutung haben:
R Kohlenstoff-Kohlenstoff-Einfachbindung zum Kohlenstoffatom einer Carbonyloxygruppe und zweibindiger organischer Rest; und
R¹, R² und R³ Wasserstoffatom und organischer Rest;
wobei mindestens zwei der Reste R, R¹, R² und R³ cyclisch miteinander verknüpft sein können;
enthalten ist.

16. Beschichtungsstoff nach einem der Ansprüche 1 bis 15, **dadurch gekennzeichnet, dass** die Verbindungen (b 1) und (c 1) aus der Gruppe, bestehend aus Carbonsäureestern der allgemeinen Formel II: 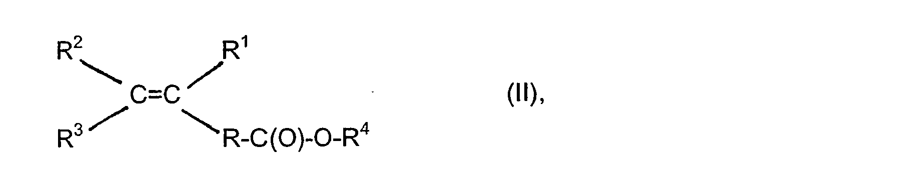 worin die Variablen R, R¹, R² und R³ die vorstehend angegebene Bedeutung haben und die Variable R⁴ für einen hydroxylgruppenhaltigen, einbindigen organischen Rest steht;
ausgewählt werden.

17. Beschichtungsstoff nach Anspruch 16, **dadurch gekennzeichnet, dass** der einbindige organische Rest R⁴ mindestens einen Rest, ausgewählt aus der Gruppe, bestehend aus hydroxylgruppenhaltigen Alkyl-, Cycloalkyl- und Arylresten, enthält oder hieraus besteht.

18. Beschichtungsstoff nach einem der Ansprüche 13 bis 17, **dadurch gekennzeichnet, dass** die mit aktinischer Strahlung aktivierbare Gruppe eine (Meth)Acrylatgruppe ist.

19. Beschichtungsstoff nach einem der Ansprüche 13 bis 18, **dadurch gekennzeichnet, dass** die Verbindungen (b 1) und (c 1) aus der Gruppe der Hydroxyalkyl(meth)acrylate ausgewählt werden.

20. Beschichtungsstoff nach einem der Ansprüche 1 bis 20, **dadurch gekennzeichnet, dass** er mindestens einen Zusatzstoff (E) enthält.

21. Beschichtungsstoff nach Anspruch 20, **dadurch gekennzeichnet, dass** der Zusatzstoff (E) aus der Gruppe, bestehend aus Polyphosphorsäure, Trockenstoffen, von den Pigmenten (D) verschiedenen, organischen und anorganischen, farbigen und unbunten, optisch effektgebenden, elektrisch leitfähigen, magnetisch abschirmenden und fluoreszierenden Pigmenten, transparenten und opaken, organischen und anorganischen Füllstoffen, Nanopartikeln, von den Bestandteilen (A) verschiedenen, oligomeren und polymeren Bindemitteln, UV-Absorbern, Lichtschutzmitteln, Radikalfängern, Photoinitiatoren, Entlüftungsmittel, Slipadditive, Polymerisationsinhibitoren, Entschäumern, von den Bestandteilen (C) verschiedenen Emulgatoren und Netzmitteln, Haftvermittlern, Verlaufmitteln, Filmbildehilfsmitteln, rheologiesteuernden Additiven und Flammschutzmitteln, ausgewählt wird.

22. Verfahren zur Herstellung eines Beschichtungsstoffs gemäß einem der Ansprüche 1 bis 21 durch Vermischen seiner Bestandteile und Homogenisieren der resultierenden Mischung, **dadurch gekennzeichnet, dass** man
(1) mindestens ein Pigment (D) mit einem Teil von mindestens einem Ester (B), mindestens einem Ester (C), Wasser sowie einem Teil des Bestandteils oder der Bestandteile (A) vermischt und die resultierenden Mischung auf einem Mahlaggregat gemahlen, wodurch eine Pigmentanreibung (1) resultiert,
(2) einen weiteren Teil des Bestandteils oder der Bestandteile (A) sowie einen weiteren Teil von mindestens einem Ester (C) miteinander vermischt und die resultierende Mischung homogenisiert, wodurch die Komplettiermischung (2) resultiert, und
(3) wonach man die Pigmentanreibung (1) und die Komplettiermischung (2) miteinander vermischt und die resultierende Mischung homogenisiert, wodurch der Beschichtungsstoff (3) resultiert.

23. Verfahren nach Anspruch 22, **dadurch gekennzeichnet, dass** man die Pigmentanreibung (1) und die Komplettiermischung (2) in einem Mengenverhältnis von (1) : (2) = 3 : 1 bis 0,33 : 1 miteinander vermischt.

24. Verfahren nach Anspruch 22 oder 23, **dadurch gekennzeichnet, dass** man zur Herstellung der Pigmentanreibung (1) als Bestandteile (A) mindestens ein Alkydharz und mindestens eine niedermolekulare, organische Verbindung verwendet.

25. Verfahren nach einem der Ansprüche 22 bis 24, **dadurch gekennzeichnet, dass** man zur Herstellung der Komplettiermischung (2) als Bestandteile (A) mindestens ein Alkydharz, mindestens eine niedermolekulare, organische Verbindung und mindestens eine oligomere oder polymere, organische Verbindung verwendet.

26. Verfahren nach einem der Ansprüche 22 bis 25, **dadurch gekennzeichnet, dass** man zur Herstellung der Pigmentanreibung (1) und der Komplettiermischung (2) mindestens einen Zusatzstoff (E) verwendet.

27. Verfahren nach Anspruch 26, **dadurch gekennzeichnet, dass** man zur Herstellung der Pigmentanreibung (1) als Zusatzstoffe (E) mindestens einen vom Ester (C) verschiedenen Emulgator oder ein von (C) verschiedenes Netzmittel sowie mindestens eine Art von Nanopartikeln verwendet.

28. Verfahren nach Anspruch 26 oder 27, **dadurch gekennzeichnet, dass** man zur Herstellung der Komplettiermischung (2) als Zusatzstoffe (E) Polyphosphorsäure, mindestens einen Photoinitiator und mindestens einen Trockenstoff verwendet.

29. Verwendung des Beschichtungsstoffs gemäß einem der Ansprüche 1 bis 21 oder des mit Hilfe des Verfahrens gemäß einem der Ansprüche 22 bis 28 hergestellten Beschichtungsstoffs zur Herstellung Coil-Coatings.

30. Verwendung nach Anspruch 29, **dadurch gekennzeichnet, dass** die Coil-Coatings haftfeste, korrosionshemmende Primerschichten sind.

## Claims

1. Liquid coating material in the form of a water-in-oil dispersion which is curable with actinic radiation, is substantially or completely free from organic solvents and has a pH < 5, comprising
(A) at least one constituent selected from the group consisting of low molecular mass, oligomeric, and polymeric organic compounds which contain at least one group which can be activated with actinic radiation, and also air-drying and oxidatively drying alkyd resins,
(B) at least one acidic ester of polyphosphoric acid and at least one compound (b1) containing at least one hydroxyl group and at least one group which can be activated with actinic radiation,
(C) at least one acidic ester of monophosphoric acid and at least one compound (c1) containing at least one hydroxyl group and at least one group which can be activated with actinic radiation, and
(D) at least one acidic, corrosion-inhibiting pigment based on polyphosphoric acid.

2. Coating material according to Claim 1,
**characterized in that** it contains, based on the solids, 1 to 10% by weight of organically bonded P₂O₅.

3. Coating material according to Claim 1 or 2,
**characterized in that** it contains, based on the solids, 5 to 30% by weight of inorganically bonded P₂O₅.

4. Coating material according to any of Claims 1 to 3, **characterized in that** the proportion of pigment (D) to constituent (A) is 1:0.5 to 1:10.

5. Coating material according to any of Claims 1 to 4, **characterized in that** it has a solids content of 70 to 99% by weight.

6. Coating material according to any of Claims 1 to 5, **characterized in that** the pigment (D) is selected from the group consisting of acidic aluminum polyphosphates and zinc polyphosphates.

7. Coating material according to any of Claims 1 to 6, **characterized in that** the low molecular mass organic compound (A) is a reactive diluent.

8. Coating material according to any of Claims 1 to 7, **characterized in that** the oligomeric or polymeric compound (A) is an oligourethane or polyurethane.

9. Coating material according to any of Claims 1 to 8, **characterized in that** the air-drying and oxidatively drying alkyd resin (A) has an oil length of 20 to 60%, based on the alkyd resin (A), 45 to 65 eq.% of the olefinically unsaturated double bonds present in the unsaturated fatty acid residues being conjugated.

10. Coating material according to any of Claims 1 to 9, **characterized in that** the group which can be activated with actinic radiation contains at least one bond which can be activated with actinic radiation.

11. Coating material according to Claim 10,
**characterized in that** the actinic radiation is electromagnetic radiation or corpuscular radiation.

12. Coating material according to Claim 11,
**characterized in that** the electromagnetic radiation embraces near infrared (NIR), visible light, UV radiation, X-rays, and gamma radiation and the corpuscular radiation embraces electron beams, proton radiation, alpha radiation, beta radiation, and neutron radiation.

13. Coating material according to any of Claims 1 to 12, **characterized in that** the bond which can be activated with actinic radiation is a carbon-carbon double bond and/or triple bond.

14. Coating material according to Claim 13,
**characterized in that** the bond which can be activated with actinic radiation is a carbon-carbon double bond.

15. Coating material according to Claim 14,
**characterized in that** the bond which can be activated with actinic radiation is contained in groups of the general formula I: 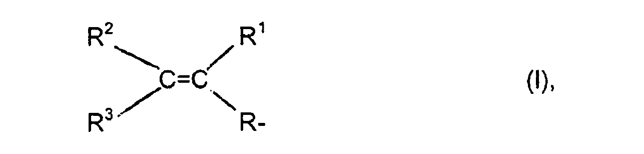 in which the variables have the following meanings:
R is a carbon-carbon single bond to the carbon atom of a carbonyloxy group or a divalent organic radical; and
R¹,R² and R³ are each a hydrogen atom or an organic radical;
it being possible for at least two of the radicals R, R¹, R², and R³ to be linked cyclically to one another.

16. Coating material according to any of Claims 1 to 15, **characterized in that** the compounds (b1) and (c1) are selected from the group consisting of carboxylic esters of the general formula II: 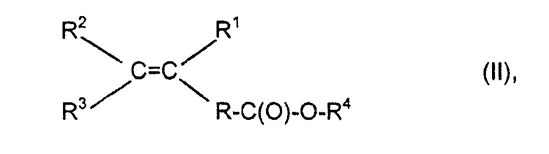 in which the variables R, R¹, R², and R³ are as defined above and the variable R⁴ stands for a hydroxyl-containing monovalent organic radical.

17. Coating material according to Claim 16,
**characterized in that** the monovalent organic radical R⁴ comprises or consists of at least one radical which is selected from the group consisting of hydroxyl-containing alkyl, cycloalkyl, and aryl radicals.

18. Coating material according to any of Claims 13 to 17, **characterized in that** the group which can be activated with actinic radiation is a (meth)acrylate group.

19. Coating material according to any of Claims 13 to 18, **characterized in that** the compounds (b1) and (c1) are selected from the group of the hydroxyalkyl (meth)acrylates.

20. Coating material according to any of Claims 1 to 20, **characterized in that** it comprises at least one additive (E).

21. Coating material according to Claim 20,
**characterized in that** the additive (E) is selected from the group consisting of polyphosphoric acid, dryers, organic and inorganic, colored and achromatic, optical effect, electrically conductive, magnetically shielding, and fluorescent pigments other than the pigments (D), transparent and opaque, organic and inorganic fillers, nanoparticles, oligomeric and polymeric binders other than the constituents (A), UV absorbers, light stabilizers, free-radical scavengers, photoinitiators, devolatilizers, slip additives, polymerization inhibitors, defoamers, emulsifiers and wetting agents other than the constituents (C), adhesion promoters, leveling agents, film formation auxiliaries, rheology control additives, and flame retardants.

22. Process for preparing a coating material according to any of Claims 1 to 21 by mixing its constituents and homogenizing the resulting mixture, **characterized in that**
(1) at least one pigment (D) is mixed with a portion of at least one ester (B), at least one ester (C), water, and a portion of the constituent or constituents (A) and the resulting mixture is ground in a milling apparatus to give a pigment dispersion (1),
(2) a further portion of the constituent or constituents (A) and a further portion of at least one ester (C) are mixed with one another and the resulting mixture is homogenized to give the makeup mixture (2), and
(3) then the pigment dispersion (1) and the makeup mixture (2) are mixed with one another and the resulting mixture is homogenized to give the coating material (3).

23. Process according to Claim 22, **characterized in that** the pigment dispersion (1) and the makeup mixture (2) are mixed with one another in a proportion of 3:1 to 0.33:1.

24. Process according to Claim 22 or 23, **characterized in that,** for preparing the pigment dispersion (1), use is made as constituents (A) of at least one alkyd resin and at least one low molecular mass organic compound.

25. Process according to any of Claims 22 to 24, **characterized in that,** for preparing the makeup mixture (2), use is made as constituents (A) of at least one alkyd resin, at least one low molecular mass organic compound, and at least one oligomeric or polymeric organic compound.

26. Process according to any of Claims 22 to 25, **characterized in that** the pigment dispersion (1) and the makeup mixture (2) are prepared using at least one additive (E).

27. Process according to Claim 26, **characterized in that,** for preparing the pigment dispersion (1), use is made as additives (E) of at least one emulsifier which is different from the ester (C) or one non-(C) wetting agent and also at least one kind of nanoparticles.

28. Process according to Claim 26 or 27, **characterized in that** polyphosphoric acid, at least one photoinitiator, and at least one dryer are used as additives (E) for preparing the makeup mixture (2).

29. Use of the coating material according to any of Claims 1 to 21 or of the coating material prepared by means of the process according to any of Claims 22 to 28 to produce coil coatings.

30. Use according to Claim 29, **characterized in that** the coil coatings are firmly adhering corrosion-inhibiting primer coats.

## Revendications

1. Matière de revêtement liquide durcissable par un rayonnement actinique, pratiquement ou totalement exempte de solvants organiques, sous forme d'une dispersion eau-dans-huile et ayant un pH < 5, contenant
(A) au moins un composant choisi dans le groupe constitué par des composés organiques de faible masse moléculaire, oligomères ou polymères, qui contiennent au moins un groupe activable par un rayonnement actinique, ainsi que des résines alkyde séchant à l'air et par oxydation,
(B) au moins un ester acide d'acide polyphosphorique et au moins un composé (b 1) contenant au moins un groupe hydroxy et au moins un groupe activable par un rayonnement actinique,
(C) au moins un ester acide d'acide monophosphorique et d'au moins un composé (c 1) contenant au moins un groupe hydroxy et au moins un groupe activable par un rayonnement actinique, et
(D) au moins un pigment acide anticorrosion à base d'acide polyphosphorique.

2. Matière de revêtement selon la revendication 1, **caractérisée en ce qu'**elle contient, par rapport à la matière solide, de 1 à 10 % en poids de P₂O₅ en liaison organique.

3. Matière de revêtement selon la revendication 1 ou 2, **caractérisée en ce qu'**elle contient, par rapport à la matière solide, de 5 à 30 % en poids de P₂O₅ en liaison organique.

4. Matière de revêtement selon l'une quelconque des revendications 1 à 3, **caractérisée en ce que** le rapport de quantités du pigment (D) au composant (A) va de 1:0,5 à 1:10.

5. Matière de revêtement selon l'une quelconque des revendications 1 à 4, **caractérisée en ce qu'**elle a une teneur en matière solide de 70 à 99 % en poids.

6. Matière de revêtement selon l'une quelconque des revendications 1 à 5, **caractérisée en ce que** le pigment (D) est choisi dans le groupe constitué par les polyphosphates d'aluminium et de zinc.

7. Matière de revêtement selon l'une quelconque des revendications 1 à 6, **caractérisée en ce que** le composé organique (A) de faible masse moléculaire est un diluant réactif.

8. Matière de revêtement selon l'une quelconque des revendications 1 à 7, **caractérisée en ce que** le composé oligomère ou polymère (A) est un oligo- ou polyuréthanne.

9. Matière de revêtement selon l'une quelconque des revendications 1 à 8, **caractérisée en ce que** la résine alkyde (A) séchant à l'air ou par oxydation a une teneur en huile de 20 à 60 %, par rapport à la résine alkyde (A), 45 à 65 Eq % des doubles liaisons à insaturation oléfinique présentes dans les restes d'acides gras insaturés étant conjuguées.

10. Matière de revêtement selon l'une quelconque des revendications 1 à 9, **caractérisée en ce que** le groupe activable par un rayonnement actinique comporte au moins une liaison activable par un rayonnement actinique.

11. Matière de revêtement selon la revendication 10, **caractérisée en ce que** le rayonnement actinique est un rayonnement électromagnétique ou un rayonnement corpusculaire.

12. Matière de revêtement selon la revendication 11, **caractérisée en ce que** le rayonnement électromagnétique comprend l'infrarouge proche (NIR), la lumière visible, le rayonnement UV, le rayonnement X, et le rayonnement gamma, et le rayonnement corpusculaire comprend un faisceau d'électrons, un faisceau de protons, le rayonnement alpha, le rayonnement bêta et un faisceau de neutrons.

13. Matière de revêtement selon l'une quelconque des revendications 1 à 12, **caractérisée en ce que** la liaison activable par un rayonnement actinique est une double liaison carbone-carbone et/ou une triple liaison carbone-carbone.

14. Matière de revêtement selon la revendication 13, **caractérisée en ce que** la liaison activable par un rayonnement actinique est une double liaison carbone-carbone.

15. Matière de revêtement selon la revendication 14, **caractérisée en ce que** la liaison activable par un rayonnement actinique est contenue dans des groupes de formule générale I : 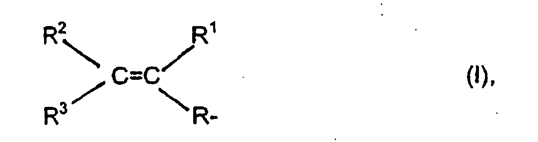 dans laquelle les variables ont les significations suivantes :
R représente une liaison simple carbone-carbone avec l'atome de carbone d'un groupe carbonyloxy et un radical organique à deux liaisons ; et
R¹, R² et R³ représentent un atome d'hydrogène et un radical organique ;
au moins deux des radicaux R, R¹, R² et R³ pouvant être liés ensemble en un cycle.

16. Matière de revêtement selon l'une quelconque des revendications 1 à 15, **caractérisée en ce que** les composés (b 1) et (c 1) sont choisis dans le groupe constitué par des esters d'acides carboxyliques de formule générale II : 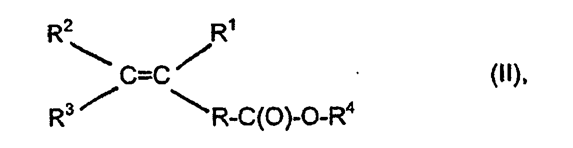 dans laquelle les variables R, R¹, R² et R³ ont les significations indiquées précédemment et la variable R⁴ représente un radical organique à une liaison, contenant des groupes hydroxy ;

17. Matière de revêtement selon la revendication 16, **caractérisée en ce que** le radical organique R⁴ à une liaison contient au moins un radical choisi dans l'ensemble constitué par des radicaux alkyle, cycloalkyle et aryle contenant des groupes hydroxy. ou consiste en un tel radical.

18. Matière de revêtement selon l'une quelconque des revendications 13 à 17, **caractérisée en ce que** le groupe activable par un rayonnement actinique est un groupe (méth)acrylate.

19. Matière de revêtement selon l'une quelconque des revendications 13 à 18, **caractérisée en ce que** les composés (b 1) et (c 1) sont choisis dans le groupe des (méth)acrylates d'hydroxyalkyle.

20. Matière de revêtement selon l'une quelconque des revendications 1 à 20, **caractérisée en ce qu'**elle contient au moins un additif (E).

21. Matière de revêtement selon la revendication 20, **caractérisée en ce que** l'additif (E) est choisi dans le groupe constitué par l'acide polyphosphorique, des siccatifs, des pigments organiques et pigments inorganiques, colorés ou incolores, à effet optique, conducteurs de l'électricité, antimagnétiques et fluorescents, différents des pigments (D), des charges organiques et charges inorganiques, transparentes ou opaques, des nanoparticules, des liants oligomères et liants polymères, différents des composants (A), des absorbeurs UV, des photoprotecteurs, des capteurs de radicaux, des photoamorceurs, des agents de désaération, des lubrifiants, des inhibiteurs de polymérisation, des antimousses, des émulsifiants différents des composants (C) et des agents mouillants, des promoteurs d'adhérence, des agents d'étalement, des adjuvants filmogènes, des additifs d'ajustement rhéologique et des agents ignifuges.

22. Procédé pour la préparation d'une matière de revêtement selon l'une quelconque des revendications 1 à 21, par mélange de ses composants et homogénéisation du mélange résultant, **caractérisé en ce que**
(1) on mélange au moins un pigment (D) avec une partie d'au moins un ester (B), d'au moins un ester (C), de l'eau ainsi qu'une partie du composant ou des composants (A) et on broie sur un appareil de broyage le mélange résultant, de sorte qu'il en résulte une pâte de pigment (1)
(2) on mélange entre elles une autre partie du composant ou des composants (A) ainsi qu'une autre partie d'au moins un ester (C) et on homogénéise le mélange résultant, de sorte qu'il en résulte le mélange de complément (2), et
(3) à la suite de quoi on mélange entre eux la pâte de pigment (1) et le mélange de complément (2) et on homogénéise le mélange résultant, de sorte qu'il en résulte la matière de revêtement (3).

23. Procédé selon la revendication 22, **caractérisé en ce qu'**on mélange entre eux la pâte de pigment (1) et le mélange de complément (2) en un rapport de quantités de (1) : (2) = 3 : 1 à 0,33 : 1.

24. Procédé selon la revendication 22 ou 23,
**caractérisé en ce que** dans la préparation de la pâte de pigment (1) on utilise comme composant (A) au moins une résine alkyde et au moins un composé organique de faible masse moléculaire.

25. Procédé selon l'une quelconque des revendications 22 à 24, **caractérisé en ce que** dans la préparation du mélange de complément (2) on utilise comme composant (A) au moins une résine alkyde, au moins un composé organique de faible masse moléculaire et au moins un composé organique oligomère ou polymère.

26. Procédé selon l'une quelconque des revendications 22 à 25, **caractérisé en ce que** dans la préparation de la pâte de pigment (1) et du mélange de complément (2) on utilise au moins un additif (E).

27. Procédé selon la revendication 26, **caractérisé en ce que** dans la préparation de la pâte de pigment (1) on utilise comme additifs (E) au moins un émulsifiant différent de l'ester (C) ou un agent mouillant différent de (C) ainsi qu'au moins un type de nanoparticules.

28. Procédé selon la revendication 26 ou 27,
**caractérisé en ce que** dans la préparation du mélange de complément (2) on utilise comme additifs (E) de l'acide polyphosphorique, au moins un photoamorceur et au moins un siccatif.

29. Utilisation de la matière de revêtement selon l'une quelconque des revendications 1 à, 21 ou de la matière de revêtement préparée à l'aide du procédé selon l'une quelconque des revendications 22 à 28, pour la production de revêtements de rubans continu (*Coil-Coatings*).

30. Utilisation selon la revendication 29,
**caractérisée en ce que** les revêtements de rubans continus sont des couches primaires anticorrosion qui adhèrent solidement.
